# FASCICULE DE BREVET EUROPEEN

(11) **EP 2 804 732 B1**
(45) Date de publication et mention de la délivrance du brevet: **04.04.2018**
(21) Numéro de dépôt: 13700392.7
(22) Date de dépôt: 16.01.2013
(51) Int. Cl.: B29C 33/12, B29C 44/12, B29C 45/14, B60R 13/08, B60N 3/04, B29C 45/26

(54) **PROCÉDÉ DE FABRICATION D'UNE STRUCTURE D'ÉQUIPEMENT INTÉRIEUR DE VÉHICULE AUTOMOBILE ET NÉCESSAIRE DE FABRICATION ASSOCIÉ**
VERFAHREN ZUR HERSTELLUNG EINER MOTORFAHRZEUG-INNENAUSSTATTUNGSSTRUKTUR UND ZUGEHÖRIGE FERTIGUNGSANLAGEN
METHOD FOR MANUFACTURING A MOT0R VEHICLE INTERIOR EQUIPMENT STRUCTURE AND ASSOCIATED MANUFACTURING FACILITIES

(30) Priorité: 17.01.2012 FR 1250461
(43) Date de publication de la demande: 26.11.2014
(73) Titulaire: Faurecia Automotive Industrie, 92000 Nanterre (FR)
(72) Inventeur: MARCEL, Valérie, 55150 Brandeville (FR); LIAUD, Didier, 08140 Pouru-Saint-Remy (FR); RONDEAU, Jean-François, 08110 Carignan (FR); MARCQ, Philippe, 08210 Mouzon (FR)
(74) Mandataire: Lavoix
(86) Numéro de dépôt international: PCT/EP2013/050696
(87) Numéro de publication internationale: WO 2013/107751

(56) Documents cités:
- FR-A1- 2 900 110
- GB-A- 2 259 449
- US-A- 5 411 688
- US-A- 5 876 826

## Description

La présente invention concerne un procédé de fabrication d'une structure d'équipement intérieur de véhicule automobile, selon le préambule de la revendication 1.

La structure est notamment un composant d'insonorisation d'un véhicule automobile. Un tel composant comporte dans certains cas une couche de base formée d'une masse lourde et au moins une pièce de masse lourde complémentaire rapportée sur une face d'envers de la couche de base.

Le composant est destiné à résoudre les problèmes acoustiques qui se posent dans un espace sensiblement clos, tel que l'habitacle du véhicule automobile (plancher, pavillon, tablier, etc.), au voisinage de sources de bruit telles qu'un moteur, le contact de pneumatiques avec une route, etc.

En général, dans le domaine des basses fréquences, les ondes acoustiques engendrées par les sources de bruit précitées subissent un « amortissement » par des matériaux sous forme de feuilles simples ou doubles (sandwich précontraint) ayant un comportement visco élastique ou par atténuation acoustique d'un système masse-ressort poreux et élastique.

Au sens de la présente invention, un composant d'insonorisation assure une « isolation » lorsqu'il empêche l'entrée d'ondes acoustiques à moyennes et hautes fréquences dans l'espace insonorisé, essentiellement par réflexion des ondes vers les sources de bruit ou l'extérieur de l'espace insonorisé.

Un composant d'insonorisation fonctionne par « absorption acoustique » (dans le domaine des moyennes et hautes fréquences) lorsque l'énergie des ondes acoustiques se dissipe dans un matériau absorbant.

Pour fournir une bonne isolation acoustique, il est connu d'utiliser des composants de type masse-ressort formés d'une couche poreuse et élastique, sur laquelle est disposée une couche imperméable de masse lourde. Pour améliorer l'absorption, une ou plusieurs couches d'un matériau absorbant peuvent encore être ajoutées sur cette masse lourde. La couche imperméable de masse lourde présente généralement une masse surfacique élevée, notamment supérieure à 1 kg/m², et une masse volumique également élevée de l'ordre de 1500 Kg/m³ à 2000 kg/m³.

Dans certains cas, il est avantageux de prévoir dans certaines zones du composant d'insonorisation, une couche de masse lourde de masse surfacique supérieure à celle des zones adjacentes. Ceci améliore localement le comportement acoustique du composant, sans avoir à alourdir le composant d'insonorisation sur toute son étendue.

A cet effet, il est connu d'assembler, des pièces complémentaires de masse lourde à des endroits précis sur la couche de masse lourde.

Un tel assemblage est fait par exemple lors de la formation de la pièce complémentaire, par injection ou pulvérisation sur la couche de masse lourde d'un matériau fluide de masse lourde. Cependant, une telle technique est onéreuse et nécessite des investissements importants. Cette technique est décrite par exemple dans US 5 922 265 ou US 2004/0150128.

Pour réduire le coût, il est connu de déposer des pièces complémentaires préalablement découpées sur la masse lourde avant qu'elle ne soit chauffée, ramollie puis introduite dans le moule de formage.

En étant chauffées avec la masse lourde, ces pièces rapportées y adhèrent et l'ensemble ne forme plus qu'une même pièce qui peut être transportée jusqu'au moule de formage.

Ceci engendre généralement une imprécision qui peut être de l'ordre de plus ou moins 50 mm. Cette imprécision est due à la fois au système de manipulation de la masse lourde ainsi qu'à des déformations locales de la sous couche durant son ramollissement du au fluage. Ce fluage résultant lui-même de tensions internes inhérentes au mode de réalisation des sous-couches et qui sont libérées lors la chauffe. Avec une telle imprécision, des trous (de passage d'organe, de fixation..) pourront se trouver entre une zone de masse lourde de faible épaisseur et une zone munie d'une pièce complémentaire et pourront présenter de ce fait un relief irrégulier sur leur pourtour. Ceci peut produire des déficits de performances lorsque la structure est montée dans le véhicule. De plus, la solution de dépôt préalable sur la masse lourde augmente le temps de cycle, car il est nécessaire de chauffer plus longtemps la couche et les pièces complémentaires pour garantir la prise de température des zones présentant une épaisseur supérieure.

Pour améliorer le positionnement des pièces, US 5 876 826 décrit un procédé d'assemblage d'une pluralité de couches entre elles, dans laquelle des points de fixation sont formés dans une première couche et des ouvertures correspondantes sont formées dans une deuxième couche.

Une telle solution est onéreuse, et nécessite une modification structurelle des pièces assemblées entre elles.

Un but de l'invention est d'obtenir un procédé de fabrication d'une structure d'équipement intérieur de véhicule automobile comportant une couche de base et au moins une pièce complémentaire assemblée sur la couche de base, le procédé étant peu onéreux tout en garantissant une bonne précision de fabrication, sans modification structurelle de la couche de base et/ou de la pièce destinée à être assemblée sur la couche de base.

A cet effet, l'invention a pour objet un procédé selon la revendication 1.

Le procédé selon l'invention peut comprendre l'une ou plusieurs caractéristiques des revendications 2 à 12 et/ou l'une au moins des caractéristiques suivantes, prise(s) isolément ou suivant toute combinaison techniquement possible :
- la butée de positionnement est solidaire de la première paroi du moule ;
- la pièce complémentaire prédécoupée est sous forme d'un solide lors de l'étape de calage ;
- la première pièce complémentaire est disposée latéralement en regard de la butée de positionnement sans chevaucher la butée de positionnement.

L'invention a également pour objet un nécessaire de fabrication d'une structure d'équipement intérieur de véhicule automobile selon la revendication 13.

Le nécessaire selon l'invention peut comprendre la caractéristique de la revendication 14 ou l'une ou plusieurs des caractéristiques suivantes, prise(s) isolément ou suivant toute combinaison techniquement possible :
- il comporte au moins une première pièce complémentaire et au moins une deuxième pièce complémentaire, le moule comportant une première butée de positionnement de la première pièce complémentaire de forme complémentaire à au moins une région de la première pièce complémentaire et une deuxième butée de positionnement de la deuxième pièce complémentaire située à l'écart de la première butée de positionnement et de forme complémentaire à au moins une région de la deuxième pièce complémentaire ;
- la première butée de positionnement comporte un premier tronçon, et un deuxième tronçon formant un angle avec le premier tronçon, pour délimiter une cavité anguleuse entre le premier tronçon et le deuxième tronçon, la première pièce complémentaire présentant un angle de forme complémentaire à la cavité anguleuse définie entre le premier tronçon et le deuxième tronçon.

L'invention sera mieux comprise à la lecture de la description qui va suivre, donnée uniquement à titre d'exemple, et faite en se référant aux dessins annexés, sur lesquels :
- la Figure 1 est une vue partielle, prise en coupe, d'un exemple de structure d'équipement intérieur de véhicule automobile fabriquée par un procédé selon l'invention ;
- la Figure 2 est une vue de dessus d'un nécessaire destiné à la mise en oeuvre du procédé selon l'invention comportant une première paroi de moule équipée de butées de positionnement ;
- la Figure 3 est une vue en coupe suivant un plan transversal d'un détail de la première paroi de moule de la Figure 2, lors d'une première phase de positionnement d'une première pièce complémentaire dans le moule ;
- la Figure 4 est une vue de dessus de la première paroi, lors de la première phase ;
- les Figures 5 et 6 sont des vues analogues aux Figures 3 et 4 illustrant une deuxième phase de positionnement d'une pluralité de pièces complémentaires ; et
- la Figure 7 est une vue analogue à la Figure 3 illustrant une troisième phase de positionnement de la couche de base ; et
- la Figure 8 est une vue analogue à la Figure 7 illustrant une quatrième phase de formation d'une couche additionnelle dans le moule.
- la Figure 9 est une vue analogue à la Figure 5, pour un deuxième procédé selon l'invention.

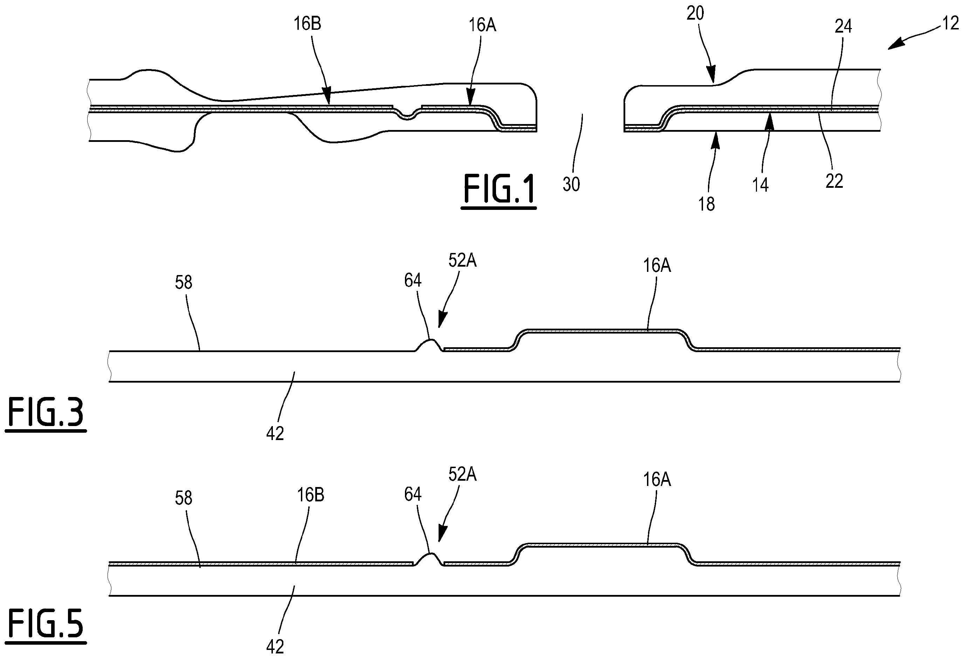

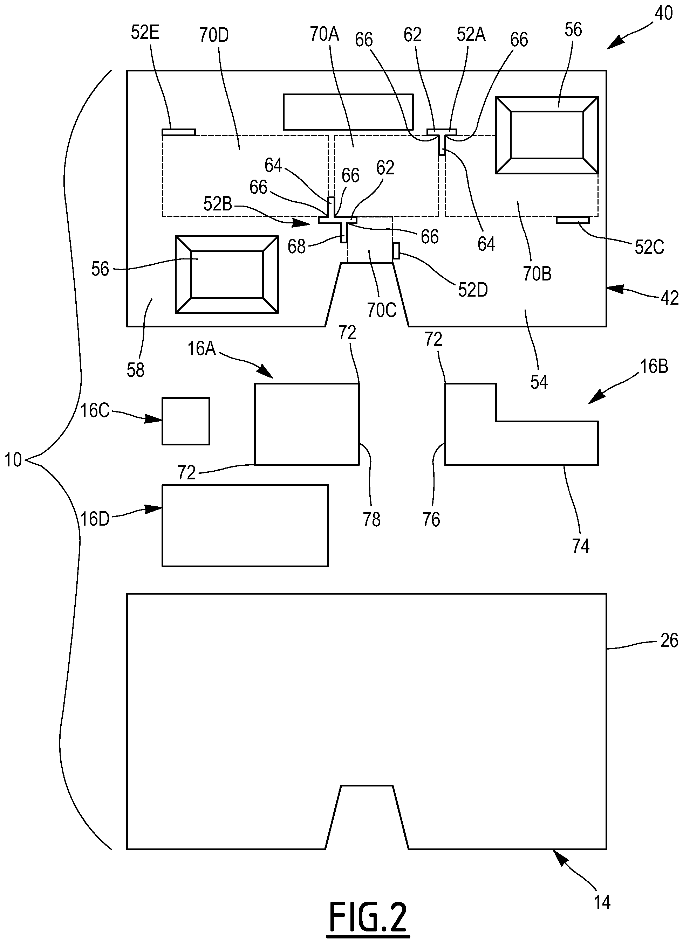

Un premier procédé de fabrication selon l'invention est mis en oeuvre à l'aide d'un nécessaire 10 illustré par la Figure 2, pour réaliser une structure 12 d'équipement intérieur de véhicule automobile, représentée partiellement et en coupe sur la Figure 1.

La structure 12 est destinée à être montée à l'intérieur d'un véhicule automobile, notamment pour former un composant d'insonorisation. Le composant est avantageusement un tablier insonorisant destiné à être interposé entre l'habitacle du véhicule et le compartiment moteur, une pièce d'insonorisation destinée à être posée sur le plancher du véhicule automobile, un passage de roue, ou toute pièce destinée à être appliquée sur une paroi du véhicule automobile pour réaliser une insonorisation.

Comme illustré par la Figure 1, la structure 12 comporte une couche de base 14 sur laquelle est assemblée au moins une première pièce complémentaire 16A, 16B.

Dans l'exemple représenté sur la Figure 1, la structure 12 comporte en outre une couche additionnelle 18 et une couche opposée 20 rapportées de part et d'autre de la couche de base 14.

La couche de base 14 représente une épaisseur inférieure à ses autres dimensions.

Comme illustré sur la Figure 1, la couche de base 14 présente une première face 22, et une deuxième face 24 sur laquelle est appliquée chaque pièce complémentaire 16A, 16B. La couche de base 14 présente un contour extérieur 26 (visible sur la Figure 2) délimitant avantageusement le pourtour de la structure 12.

Dans un mode de réalisation avantageux, la couche de base 14 est réalisée à base d'un matériau étanche au passage de l'air.

Avantageusement, lorsque la structure 12 est un composant d'insonorisation, la couche de base 14 est une couche de masse lourde. La masse lourde comprend avantageusement un matériau thermoplastique de type polyoléfine, tel qu'un copolymère d'éthylène et d'acétate de vinyle, un polyéthylène, un polymère éthylène propylène diène monomère.

Elle incorpore avantageusement des charges, de type bitume, craie et/ou sulfate de baryum permettant d'obtenir une densité élevée par exemple supérieure à 1500 kg/m³, de préférence supérieure ou égale à 2000 kg/m³.

La masse surfacique de la couche 14 est comprise avantageusement entre 0,2 kg/m² et 9 kg/m² notamment entre 1 kg/m² et 4 kg/m². L'épaisseur de la couche 14 est généralement comprise entre 0,1 mm et 5 mm.

Dans l'exemple représenté sur les figures, la structure 12 comporte une pluralité de pièces complémentaires 16A à 16D rapportées sur la deuxième face 24 de la couche de base 14.

Chaque pièce complémentaire 16A à 16D est formée d'un bloc de matériau solide, prédécoupé avant son assemblage sur la couche de base 14. Chaque pièce complémentaire 16A à 16D est autoportante et présente ainsi une tenue autonome, à l'inverse d'un matériau liquide ou fluide.

Chaque pièce complémentaire 16A à 16D présente une étendue, prise suivant son contour extérieur, inférieure à l'étendue totale de la couche de base 14, prise suivant son contour extérieur 26.

Avantageusement, chaque pièce complémentaire 16A à 16D présente une étendue maximale inférieure à 50% de l'étendue de la deuxième face 24 de la couche de base 14.

Chaque pièce complémentaire 16A à 16D est fixée sur la deuxième face 24 directement par compression à chaud, ou avec interposition d'un matériau de fixation, tel qu'un adhésif comme un adhésif « hot melt ».

Chaque pièce 16A à 16D définit sur la deuxième face 24 une région couverte par la pièce 16A à 16D et au moins une région découverte.

Dans l'exemple représenté sur les figures, les pièces 16A à 16D sont disposées adjacentes les unes aux autres, mais sans superposition l'une de l'autre. Ainsi, les contours extérieurs des pièces complémentaires 16A à 16D sont placés adjacents les uns aux autres, sans chevauchement l'un sur l'autre.

Dans l'exemple représenté sur la Figure 1, chaque pièce complémentaire 16A à 16D présente une épaisseur comprise entre 10% et 300% de l'épaisseur de la couche de base 14, dans la région sur laquelle elle est appliquée.

Dans le cas où la structure 12 est un composant d'insonorisation, la pièce complémentaire 16 est formée de masse lourde, par exemple du même matériau que celui constituant la couche de base 14. Ainsi, en regard de chaque pièce complémentaire 16A à 16D, la structure 12 présente une épaisseur de masse lourde supérieure à l'épaisseur de masse lourde présente dans chaque région de la couche de base 14 dépourvue de pièce complémentaire 16A à 16D.

Chaque pièce complémentaire 16A à 16D augmente localement l'isolation acoustique dans des régions choisies de la structure 12, sans avoir à augmenter la masse totale de la structure 12.

La couche additionnelle 18 est assemblée sur la première face 22 de la couche de base, à l'opposé de chaque pièce complémentaire 16A à 16D. Elle est par exemple formée par une couche de mousse

La mousse formant la couche 18 est une mousse à cellules ouvertes notamment réalisée en polyuréthanne.

Dans un mode de réalisation avantageux, la mousse est injectée et l'assemblage se produit lors de l'injection. Dans une variante, la couche additionnelle 18 est assemblée sur la couche de base 14 après sa formation. Dans un exemple, la mousse est refendue, et est assemblée sur la couche de base 14.

Dans une autre variante, la couche additionnelle 18 est en feutre. Elle est assemblée sur la couche de base 14.

Dans ce cas, l'adhésion du feutre ou de la mousse refendue est assurée par une colle préalablement appliquée telle qu'un hot melt PSA (Pressure Sensitive Adhesive ou « adhésif sensible à la pression ») qui agit quand on exerce de la pression en refermant le moule, ou une colle liquide appliquée au pistolet par l'opérateur ou par un robot au moment où la pièce est introduite dans le moule.

La couche additionnelle 18 est souple pour former une couche de découplage. Elle présente un module d'Young compris entre 100 Pa et 100 000 Pa, notamment environ 8000 Pa tel que mesuré par la norme NF EN ISO 527.

L'épaisseur maximale de la couche additionnelle 18 est supérieure à celle de la couche de base 14.

Cette épaisseur peut cependant être variable en se déplaçant sur la première face 22, comme l'illustre la Figure 1.

La couche opposée 20 est avantageusement une couche souple. Elle est par exemple formée à base d'une mousse injectée sur la deuxième face 24 et sur chaque pièce complémentaire 16A à 16D. En variante, la couche 20 est formée d'une couche assemblée sur la deuxième face 24 après sa formation, telle qu'une couche de mousse refendue ou de feutre.

Ainsi, la couche opposée 20, recouvre au moins partiellement, avantageusement totalement, chaque pièce complémentaire 16A à 16D.

L'épaisseur maximale de la couche additionnelle 18 est supérieure à l'épaisseur maximale de la couche de base 14. Dans l'exemple représenté sur la Figure 1, cette épaisseur est variable en se déplaçant le long de la couche de base 14.

En référence à la Figure 1, la structure 12 présente avantageusement au moins un orifice traversant 30 qui est ménagé à travers la couche de base 14, la couche additionnelle 18 et la couche opposée 20, et éventuellement, à travers une pièce complémentaire 16A à 16D.

Chaque orifice 30 est notamment un orifice de passage d'organes fonctionnels du véhicule, tels qu'une colonne de direction, trous de fixation, entrée d'air, joints.

La structure 12 est produite par le procédé selon l'invention à l'aide du nécessaire 10 représenté sur la Figure 2. Ce nécessaire comprend, outre la couche de base 14, et chaque pièce complémentaire 16A à 16B, un moule 40 destiné à conformer la structure 12 en assemblant chaque pièce complémentaire 16A à 16D sur la couche de base 14.

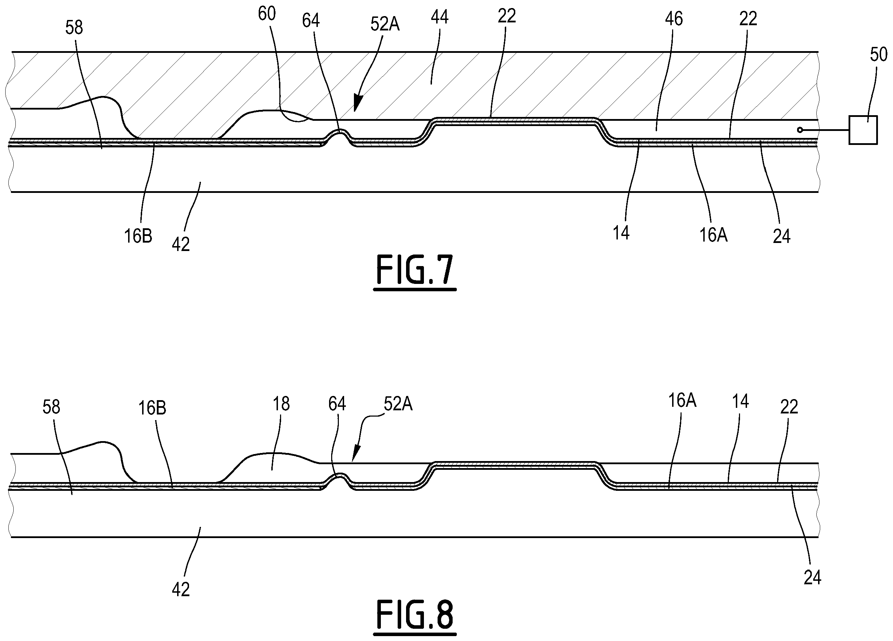

Comme illustré par les Figures 2 à 8, le moule 40 comporte une première paroi 42 d'appui, et une deuxième paroi opposée 44 (visible sur la Figure 7), destinée à être placée en regard de la première paroi 42 pour délimiter une cavité de moulage 46.

En référence à la Figure 7, et dans le cas d'une couche 18 injectée, le moule 40 comporte en outre un ensemble d'injection 50 de la couche additionnelle 18.

Dans le cas d'une couche additionnelle 18 assemblée, par exemple, en mousse refendue ou en feutre, un ensemble (non représenté) d'application d'un adhésif est prévu au voisinage du moule 40.

Selon l'invention, le moule 40 comporte en outre au moins une butée de positionnement 52A à 52E de chaque pièce complémentaire 16A à 16D permettant le positionnement précis de chaque pièce complémentaire 16A à 16D sur la première paroi 42 lors de l'élaboration de la structure 12.

La première paroi 42 définit un espace de moulage 54 de forme complémentaire au contour 26 de la couche de base 14. Elle présente des reliefs 56 destinés à conformer la couche de base 14 pour former par exemple des creux et des bosses dans cette couche 14.

La première paroi 42 définit ainsi une surface d'appui 58 de la deuxième face 24 de la couche de base 14 et de chaque pièce complémentaire 16A à 16D. La surface d'appui 58 est destinée à s'étendre en regard de la deuxième paroi du moule 44.

La deuxième paroi 44 est mobile entre une position d'ouverture du moule, disposée à l'écart de la première paroi 42, et une position de moulage, représentée sur la

Figure 7, dans laquelle elle est disposée au voisinage et/ou au contact de la première paroi 42.

Dans la position de moulage, la deuxième paroi 44 délimite la cavité de moulage 46. Elle présente une surface opposée 60 de forme complémentaire à une surface extérieure de la couche additionnelle 18. La cavité de moulage 46 est ainsi sensiblement conjuguée avec la couche additionnelle 20.

L'ensemble 50 d'injection comporte des moyens d'amenée d'un matériau fluide dans la cavité de moulage 46. Ces moyens d'amenée débouchent dans la cavité 46. Le matériau fluide est propre à se solidifier dans le moule 40. Ce matériau est par exemple un matériau moussant.

Dans l'exemple représenté sur les Figures 2, 4 et 6, le moule 40 présente une pluralité de butées de positionnement 52A à 52E.

Chaque butée 52A, 52E est destinée à caler au moins une pièce complémentaire 16A à 16D. Dans cet exemple, les butées 52A à 52E sont disjointes. Elles sont séparées les unes des autres, pour que chaque pièce complémentaire 16A à 16D soit calée entre au moins deux butées disjointes 52A à 52E.

Chaque butée 52A à 52E fait saillie à l'écart de la surface d'appui 58 sur une épaisseur inférieure à trois fois l'épaisseur de la couche de base 14 avec avantageusement un maximum de 6 mm. L'épaisseur de chaque butée 52A à 52B est par ailleurs supérieure à l'épaisseur de chaque pièce complémentaire 16A à 16B.

Chaque butée 52A à 52E est disposée, dans l'espace de moulage 54, à l'écart de la périphérie de la paroi 42.

Chaque butée 52A à 52E présente avantageusement une surface supérieure arrondie.

Au moins une butée 52A, 52B comporte un tronçon principal 62 et un deuxième tronçon 64 délimitant entre eux une cavité anguleuse 66 de réception d'un angle d'une pièce complémentaire 16A à 16B.

Dans le cas de la butée 52A, le premier tronçon 62 et le deuxième tronçon 64 délimitent deux cavités anguleuses 66 situées de part et d'autre du deuxième tronçon 64 pour positionner respectivement les angles adjacents de deux pièces complémentaires 16A, 16B adjacentes. La butée 52A présente ainsi une forme de T.

La butée 52B présente un troisième tronçon 68 situé à l'opposé du deuxième tronçon 64 pour délimiter une cavité anguleuse additionnelle 66 de réception d'une troisième pièce complémentaire 16E.

Dans l'exemple représenté sur la Figure 2, au moins une butée 52C, 52E présente un tronçon linéaire destiné à entrer en contact avec un bord d'une pièce complémentaire 16A, 16D.

Les butées 52A à 52E délimitent entre elles des espaces intermédiaires 70A à 70D, dont le contour est au moins en partie complémentaire au contour extérieur d'une pièce 16A à 16D.

Les butées 52A à 52E sont avantageusement venues de matière avec la paroi 42. Elles présentent par exemple une hauteur inférieure à 6 mm et une largeur de l'ordre du cm pour ne pas influencer la constitution de la structure 12, ni ses propriétés acoustiques.

Un premier procédé de fabrication de la structure 12 va maintenant être décrit.

Initialement, le moule 40 est ouvert. Un lot comportant une couche de base 40 et une ou plusieurs pièces complémentaires 16A à 16D est fourni au voisinage du moule 40.

Chaque pièce complémentaire 16A à 16D est préchauffée, pour permettre sa déformation dans le moule 40 et éventuellement l'activation d'un adhésif présent sur la pièce complémentaire 16A à 16D en vue de sa fixation sur la couche de base 14.

Le chauffage est par exemple réalisé à l'aide d'un poste de chauffe, notamment par infrarouge, disposé à côté du moule 40.

Dans une première phase, chaque pièce complémentaire 16A à 16D est disposée dans le moule 40. A cet effet, chaque pièce 16A à 16D est saisie par un opérateur ou par un robot, et est amenée au contact de la première paroi 42. La pièce 16A à 16D est calée dans un espace de réception 70A à 70D respectif en la plaçant au contact d'au moins une butée 52A à 52E de positionnement.

Avantageusement, chaque pièce 16A à 16D est placée au contact d'au moins deux butées disjointes 52A à 52E.

Un angle 72 de la pièce 16A à 16D est par exemple introduit dans une cavité anguleuse 66 d'une butée 52A, 52B. Un bord 74 de la pièce 16A à 16D est calé contre un tronçon longitudinal d'une butée 52C.

Ainsi, la première pièce 16A est calée entre les butées 52A et 52B en plaçant deux de ses angles opposés 72 dans des cavités anguleuses 66 respectives sur les butées 52A, 52B.

Puis, une deuxième pièce complémentaire 16B est disposée entre les butées 52A, 52C, avec son angle 72 disposé dans la cavité anguleuse 66 de la butée 52A et son bord opposé 74 en appui contre la butée 52C.

Au moins un bord 76 de la deuxième pièce 16B est disposé parallèlement au bord 78 opposé de la première pièce 16A, avantageusement en contact avec le bord 78.

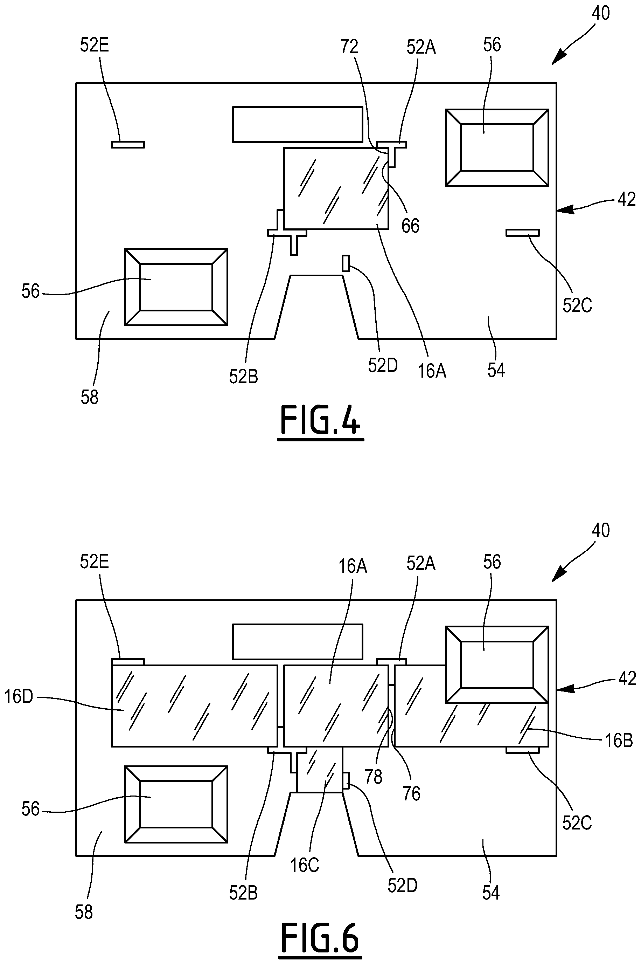

Puis, comme illustré par la Figure 6, la troisième pièce 16C est calée entre les butées 52B et 52D en regard de la première pièce 16A à l'opposé de la deuxième pièce 16B.

La quatrième pièce 16D est alors calée entre la butée 52B et la butée 52E, en regard de la première pièce 16A.

La première pièce 16A, la deuxième pièce 16B, la troisième pièce 16C et la quatrième pièce 16D sont alors parfaitement calées et positionnées les unes par rapport aux autres comme l'illustrent les Figures 5 et 6.

Lorsqu'un adhésif est présent sur la pièce 16A à 16D, il est placé à l'opposé de la première paroi 42.

Puis, la couche de base 14 est introduite dans le moule 40 pour être appliquée contre la première paroi 42 et contre chaque pièce complémentaire 16A à 16D, afin de conformer la couche de base 14 à la forme de la paroi 42 et afin de fixer chaque pièce complémentaire 16A à 16D sur la couche de base 14.

Avantageusement, la conformation et la fixation sont activées par chauffage de la couche de base 14. La couche de base 14 est alors chauffée avant son introduction dans le moule 40.

Ensuite, la deuxième paroi 44 est déplacée par rapport à la première paroi 42 pour fermer le moule 40.

Dans l'exemple représenté sur la Figure 7, au moins une région de la deuxième paroi 44 s'applique localement contre la première face 22 de la couche de base 14 et au moins une région de la deuxième paroi 44 est disposée à l'écart de la première face 22 pour former la cavité de moulage 46.

Puis, dans le cas d'une couche additionnelle 18 injectée, le matériau fluide destiné à former la couche additionnelle 18 est introduit dans la cavité 46 par l'ensemble d'injection 50.

La formation de la couche additionnelle 18, par exemple par moussage, ainsi que le sous-vide réalisé simultanément, provoque la compression de la couche de base 14 contre la première paroi 42 et l'enserrement de chaque pièce complémentaire 16A à 16D entre la deuxième face 24 et la première paroi 42.

Dans le cas d'une couche additionnelle 18 assemblée, celle-ci est placée dans le moule 40 avant sa fermeture.

Une fois la couche additionnelle 18 formée ou/et assemblée, le moule 40 est ouvert. L'ensemble formé par la couche de base 14, par chaque pièce complémentaire 16A à 16D assemblée sur la couche de base 14 et par la couche additionnelle 18 est extrait du moule 40 et est introduit dans un moule additionnel (non représenté) pour former ou/et assembler la couche opposée 20.

Avantageusement, le perçage de chaque orifice 30 est ensuite effectué à travers la couche de base 14, la couche additionnelle 18, la couche opposée 20 et éventuellement à travers une pièce complémentaire 16A à16D.

Dans le procédé selon l'invention, le positionnement relatif des pièces complémentaires 16A à 16D sur la couche de base 14 est très précis. Ce positionnement est obtenu avec une précision par exemple inférieure à plus ou moins 10 mm. Ceci conduit à des structures 12 qui présentent une qualité de fabrication élevée, et des propriétés d'utilisation, notamment acoustiques, extrêmement fiables.

Ce résultat est obtenu de manière très simple, sans avoir à modifier la structure 12, ni ses constituants 14, 16A à 16D.

La mise en place du procédé selon l'invention ne nécessite pas un investissement important. En outre, aucune surépaisseur côté endroit n'est produite, puisque les pièces complémentaires 16A à 16D sont nécessairement placées à l'écart des unes des autres.

La qualité des orifices 30 de passage d'organes est donc assurée. De plus, dans certains cas, les pièces complémentaires 16A à 16D sont découpées avec une forme qui correspond exactement à la configuration avec passage d'organe pour garantir un plus faible niveau de fuites acoustiques.

En variante, la structure 12 comporte des couches supplémentaires, par exemple réalisées en mousse ou en feutre.

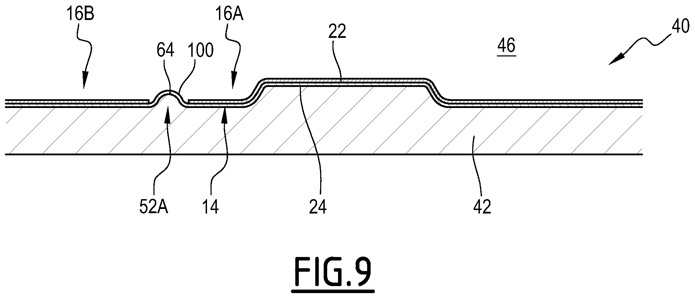

Un deuxième procédé de fabrication selon l'invention est illustré par la Figure 9. Ce procédé est destiné à former des structures 12 avantageusement bicouches comprenant une couche additionnelle 18 sur la première face 22 d'une couche de base 14, avec interposition de pièces complémentaires 16A à 16B entre la couche additionnelle 18 et la première face 22.

Le procédé est apte à former par exemple des composants acoustiques de type masse-ressort. Les pièces complémentaires 16A, 16B sont interposées entre la couche de base 14 et la couche additionnelle 18.

Le procédé de fabrication d'une telle structure 12 comporte tout d'abord la disposition d'une deuxième face 24 de la couche de base 14 contre la première paroi 42.

La couche de base 14 est préalablement chauffée pour épouser la conformation de la première face 42 par déformation.

Ainsi, la couche de base 14 couvre chaque butée 52A à 52E et se déforme localement en regard de chaque butée 52A à 52E.

Une partie saillante 100 est ainsi créée sur la surface de la couche de base 14. La partie saillante 100 fait saillie par rapport à la première paroi 42. Elle définit un relief apte à indexer le positionnement de chaque pièce complémentaire 16A à 16D.

Pour engendrer chaque partie saillante 100, l'épaisseur de la couche de base 14 en regard de chaque saillie 52A à 52E est avantageusement inférieure ou égale à la hauteur de chaque saillie 52A à 52E. Ainsi, chaque partie saillante 100 formée à la surface de la couche de base présente sensiblement une forme homothétique à celle de la saillie 52A à 52B sur laquelle elle est disposée.

Puis, chaque pièce complémentaire 16A à 16B est placée sur la première face 22 en positionnant la pièce complémentaire 16A à 16D en regard d'une butée de positionnement 52A à 52E, en appui contre une saillie 100.

Ensuite, comme décrit précédemment, un matériau fluide destiné à former la couche additionnelle 18 est introduit dans la cavité 46 par l'ensemble d'injection. En variante la couche additionnelle 18 peut être assemblée, c'est-à-dire placée dans le moule 40 avant sa fermeture. Dans ce cas il pourra s'agir d'une couche de mousse refendue ou d'une pièce en feutre assemblées par collage.

Quelque soit la nature de la couche additionnelle 18, le sous vide réalisé dans le moule va provoquer la compression de la couche de base 14 contre la première paroi 42 et l'enserrement de chaque pièce complémentaire 16A à 16D entre la couche additionnelle 18 et la couche de base 14.

Comme précédemment, les pièces complémentaires 16A à 16D sont positionnées de manière très précise dans le moule 40, grâce aux butées de positionnement 52A à 52E en regard desquelles elles sont placées, par l'intermédiaire des saillies 100 formées dans la couche de base 14. Une fois la couche additionnelle 18 fabriquée, sa face opposée à la couche de base 14 est lisse et plate, ce qui permet l'adaptation des joints à l'endroit des passages d'organes, sans aucun souci de positionnement.

## Revendications

1. Procédé de fabrication d'une structure (12) d'équipement intérieur de véhicule automobile, comprenant les étapes suivantes :
- fourniture d'une couche de base (14) présentant une première face (22) et une deuxième face (24) ;
- disposition de la deuxième face (24) contre une première paroi (42) d'un moule (40) ;
- fixation d'au moins une pièce complémentaire (16A à 16D) prédécoupée sur l'une de la première face (22) et de la deuxième face (24), la ou chaque pièce complémentaire (16A à 16D) présentant une étendue inférieure à l'étendue de ladite face (22, 24) ;
**caractérisé en ce que** le procédé comporte une étape de saisie de la pièce complémentaire (16A à 16D) prédécoupée, puis une étape de calage de la pièce complémentaire (16A à 16D) prédécoupée en regard d'une butée de positionnement (52A à 52E) de forme sensiblement complémentaire à au moins un bord de la pièce complémentaire (16A à 16D), la butée de positionnement (52A à 52E) faisant saillie par rapport à la première paroi (42) à l'écart de la périphérie de la première paroi (42).

2. Procédé selon la revendication 1, **caractérisé en ce qu'**il comporte l'assemblage dans le moule (40) d'au moins une couche additionnelle (18) sur la première face (22) de la couche de base (14).

3. Procédé selon la revendication 2, **caractérisé en ce que** l'assemblage de la couche additionnelle (18) sur la première face (22) est réalisé lors de la formation, notamment par moussage, de la couche additionnelle (18).

4. Procédé selon l'une quelconque des revendications précédentes, **caractérisé en ce qu'**il comporte, après la fixation de la ou de chaque pièce complémentaire (16A à 16D) sur l'une de la première face (22) et de la deuxième face (24), l'assemblage d'une couche opposée (20) sur la deuxième face (24), la couche opposée (20) recouvrant avantageusement la pièce complémentaire (16A à 16D) lorsque la pièce complémentaire (16A à 16D) est assemblée sur la deuxième face (24).

5. Procédé selon l'une quelconque des revendications précédentes, **caractérisé en ce qu'**il comporte une étape de découpe d'une ouverture (30) à travers la structure (12), l'étape de découpe comportant la découpe de la couche de base (14) et éventuellement d'au moins une partie de la pièce complémentaire (16A à 16D).

6. Procédé selon l'une quelconque des revendications précédentes, **caractérisé en ce que** l'étape de fixation comporte la fixation d'au moins une première pièce complémentaire prédécoupée (16A) et d'au moins une deuxième pièce complémentaire prédécoupée(16D) sur la couche de base (14), l'étape de positionnement comprenant le calage de la première pièce complémentaire (16A) en regard d'une première butée de positionnement (52A), puis le positionnement de la deuxième pièce complémentaire (16B) en regard de la première pièce complémentaire (16A), et en regard d'une deuxième butée de positionnement (52C) située à l'écart de la première butée de positionnement (52A).

7. Procédé selon la revendication 6, **caractérisé en ce qu'**il comporte l'étape de fixation d'au moins une troisième pièce complémentaire prédécoupée (16D), sur la couche de base (14), l'étape de positionnement comprenant le positionnement de la troisième pièce complémentaire (16D) en regard de la première pièce complémentaire (16A) à l'opposé de la deuxième pièce complémentaire (16B), et en regard d'une troisième butée de positionnement (52E) faisant saillie à partir de la première paroi (42) à l'écart de la première butée de positionnement (52A) et de la deuxième butée de positionnement (52C).

8. Procédé selon l'une quelconque des revendications précédentes, **caractérisé en ce que** la première butée de positionnement (52A) comporte un premier tronçon (62), et un deuxième tronçon (64) formant un angle avec le premier tronçon (62), pour délimiter une cavité anguleuse (66) entre le premier tronçon (62) et le deuxième tronçon (64), la première pièce complémentaire (16A) présentant un angle (72) se calant lors de l'étape de positionnement dans la cavité anguleuse (66) définie entre le premier tronçon (62) et le deuxième tronçon (64).

9. Procédé selon l'une quelconque des revendications précédentes, **caractérisé en ce que** la première butée de positionnement (52A) est venue de matière avec la première paroi (42) du moule.

10. Procédé selon l'une quelconque des revendications précédentes, **caractérisé en ce que** la couche de base (14) est une couche d'isolation acoustique, avantageusement une couche de masse lourde, la pièce complémentaire (16A à 16D) étant une pièce complémentaire d'isolation acoustique, avantageusement une pièce complémentaire de masse lourde.

11. Procédé selon l'une quelconque des revendications précédentes, **caractérisé en ce que** la pièce complémentaire (16A à 16D) est fixée sur la deuxième face (24),
le procédé comportant, avant la disposition de la deuxième face (24) contre la première paroi (42), une étape de calage de la ou de chaque pièce complémentaire (16A à 16D) contre la première paroi (42) au contact d'une butée de positionnement (52A à 52E) faisant saillie par rapport à la première paroi (42) à l'écart de la périphérie de la première paroi (42),
la pièce complémentaire (16A à 16D) étant interposée entre la première paroi (42) et la deuxième face (24) lors de l'étape de disposition de la deuxième face (24) contre la première paroi (42), la couche de base (14) couvrant avantageusement la ou chaque butée de positionnement (52A à 52E) après l'étape de disposition de la deuxième face (24) contre la première paroi (42).

12. Procédé selon l'une quelconque des revendications 1 à 10, **caractérisé en ce que** la pièce complémentaire (16A à 16D) est fixée sur la première face (22),
le procédé comportant la disposition de la deuxième face (24) contre la première paroi (42), puis la déformation de la couche de base (14) en regard d'une butée de positionnement (52A à 52E) pour former une partie saillante (100) et le calage de la ou de chaque pièce complémentaire (16A à 16D) contre la partie saillante (100) en regard de la butée de positionnement (52A à 52E).

13. Nécessaire (10) de fabrication d'une structure (12) d'équipement intérieur de véhicule automobile comportant :
- une couche de base (14) présentant une première face (22) et une deuxième face (24);
- au moins une pièce complémentaire (16A à 16D) prédécoupée destinée à être fixée sur l'une de la première face (22) et de la deuxième face (24) ;
- un moule (40) comportant au moins une première paroi (42) d'appui de la deuxième face (24) de la couche de base (14), **caractérisé en ce que** le moule (40) comporte au moins une butée de positionnement (52A à 52E) de la pièce complémentaire prédécoupée (16A à 16D) dans le moule (40), de forme sensiblement complémentaire à au moins un bord de la pièce complémentaire (16A à 16D), la butée de positionnement (52A à 52E) faisant saillie par rapport à la première paroi (42), à l'écart de la périphérie de la première paroi (42).

14. Nécessaire (10) selon la revendication 13, **caractérisé en ce qu'**il comporte une deuxième paroi (44) opposée à la première paroi (42), la deuxième paroi (44) délimitant avec la première paroi (42) une cavité de moulage (46), le nécessaire (10) comportant un ensemble (50) d'injection d'un matériau fluide, avantageusement d'un matériau moussant, dans la cavité de moulage (46).

## Patentansprüche

1. Verfahren zur Herstellung einer Struktur (12) für die Innenausstattung eines Kraftfahrzeugs, folgende Schritte umfassend:
- Bereitstellen einer Grundschicht (14), die eine erste Fläche (22) und eine zweite Fläche (24) aufweist;
- Anordnen der zweiten Fläche (24) gegen eine erste Wand (42) einer Form (40), die zur Umformung der Struktur (12) dient;
- Befestigen mindestens eines vorgeschnittenen komplementären Teils (16A bis 16D) auf der ersten Fläche (22) oder der zweiten Fläche (24), wobei das oder jedes komplementäre Teil (16A bis 16D) eine Ausdehnung aufweist, die kleiner ist als die Ausdehnung der Fläche (22, 24);
**dadurch gekennzeichnet, dass** das Verfahren einen Schritt des Erfassens des vorgeschnittenen komplementären Teils (16A bis 16D), dann einen Schritt des Ausrichtens des vorgefertigten komplementären Teils in Gegenüberstellung zu einem Positionieranschlag (52A bis 52E) von zu mindestens einem Rand des komplementären Teils (16A bis 16D) im Wesentlichen komplementärer Form aufweist, wobei der Positionieranschlag (52A bis 52E) in Bezug auf die erste Wand (42) mit Abstand zu dem Umfang der ersten Wand (42) hervorspringt.

2. Verfahren nach Anspruch 1, **dadurch gekennzeichnet, dass** es das Zusammenfügen mindestens einer zusätzlichen Schicht (18) mit der ersten Fläche (22) der Grundschicht (14) in der Form (40) aufweist.

3. Verfahren nach Anspruch 2, **dadurch gekennzeichnet, dass** das Zusammenfügen der zusätzlichen Schicht (18) mit der zweiten Fläche (22) bei der Bildung der zusätzlichen Schicht, insbesondere durch Schäumen, hergestellt wird.

4. Verfahren nach einem beliebigen der vorhergehenden Ansprüche, **dadurch gekennzeichnet, dass** es nach dem Befestigen der oder jedes komplementären Teils (16A bis 16D) auf der ersten Fläche (22) oder der zweiten Fläche (24) das Zusammenfügen einer entgegengesetzten Schicht (20) mit der zweiten Fläche (24) aufweist, wobei die entgegengesetzte Schicht (20) vorteilhafterweise das komplementäre Teil (16A bis 16D) bedeckt, wenn das komplementäre Teil (16A bis 16D) mit der zweiten Fläche (24) zusammengefügt wird.

5. Verfahren nach einem beliebigen der vorhergehenden Ansprüche, **dadurch gekennzeichnet, dass** es einen Schritt des Schneidens einer Öffnung (30) durch die Struktur (12) aufweist, wobei der Schritt des Schneidens das Schneiden der Grundschicht (14) und gegebenenfalls mindestens eines Teils des komplementären Teils (16A bis 16D) aufweist.

6. Verfahren nach einem beliebigen der vorhergehenden Ansprüche, **dadurch gekennzeichnet, dass** der Schritt des Befestigens die Befestigung mindestens eines ersten vorgeschnittenen komplementären Teils (16A) und mindestens eines zweiten vorgeschnittenen komplementären Teils (16D) an der Grundschicht (14) aufweist, wobei der Schritt des Positionierens die Ausrichtung des ersten komplementären Teils (16A) in Gegenüberstellung zu einem ersten Positionieranschlag (52A), dann die Positionierung des zweiten komplementären Teils (16B) in Gegenüberstellung zu dem ersten komplementären Teil (16A) und in Gegenüberstellung zu einemzweiten Positionieranschlag (52C), der mit Abstand zu dem ersten Positionieranschlag (52A) liegt, umfasst.

7. Verfahren nach Anspruch 6, **dadurch gekennzeichnet, dass** es den Schritt des Befestigens mindestens eines dritten vorgeschnittenen komplementären Teils (16D) an der Grundschicht (14) aufweist, wobei der Positionierschritt die Positionierung des dritten komplementären Teils (16D) in Gegenüberstellung zu dem ersten komplementären Teil (16A) entgegengesetzt zu dem zweiten komplementären Teil (16B) und in Gegenüberstellung zu einem dritten Positionieranschlag (52E), der von der ersten Wand (42) mit Abstand zu dem ersten Positionieranschlag (52A) und dem zweiten Positionieranschlag (52C) hervorspringt, umfasst.

8. Verfahren nach einem beliebigen der vorhergehenden Ansprüche, **dadurch gekennzeichnet, dass** der erste Positionieranschlag (52A) einen ersten Abschnitt (62) und einen zweiten Abschnitt (64) aufweist, der einen Winkel mit dem ersten Abschnitt (62) bildet, um eine Winkelvertiefung (66) zwischen dem ersten Abschnitt (62) und dem zweiten Abschnitt (64) zu bilden, wobei das erste komplementäre Teil (16A) eine Ecke (72) aufweist, die sich bei dem Schritt der Positionierung in der Winkelvertiefung (66), die zwischen dem ersten Abschnitt (62) und dem zweiten Abschnitt (64) gebildet ist, ausrichtet.

9. Verfahren nach einem beliebigen der vorhergehenden Ansprüche, **dadurch gekennzeichnet, dass** der erste Positionieranschlag (52A) einstückig mit der ersten Wand (42) der Form hergestellt ist.

10. Verfahren nach einem beliebigen der vorhergehenden Ansprüche, **dadurch gekennzeichnet, dass** die Grundschicht (14) eine akustische Dämmschicht, vorzugsweise eine Schicht schwerer Masse, ist, wobei das komplementäre Teil (16A bis 16D) ein komplementäres akustisches Dämmteil, vorzugsweise ein komplementäres Teil schwerer Masse, ist.

11. Verfahren nach einem beliebigen der vorhergehenden Ansprüche, **dadurch gekennzeichnet, dass** das komplementäre Teil (16A bis 16D) an der zweiten Fläche (24) befestigt wird,
wobei das Verfahren vor der Anordnung der zweiten Fläche (24) gegen die erste Wand (42) einen Schritt des Ausrichtens der oder jedes komplementären Teils (16A bis 16D) gegen die Wand (42) in Kontakt mit einem Positionieranschlag (52A bis 52E) aufweist, der in Bezug auf die erste Wand (42) mit Abstand zum Umfang der ersten Wand (42) vorspringt,
wobei das komplementäre Teil (16A bis 16D) zwischen der ersten Wand (42) und der zweiten Fläche (24) bei dem Schritt des Anordnens der zweiten Fläche (24) gegen die erste Wand (42) angeordnet wird, wobei die Grundschicht (14) vorteilhafterweise den oder jeden Positionieranschlag (52A bis 52E) nach dem Schritt des Anordnens der zweiten Fläche (24) gegen die erste Wand (42) bedeckt.

12. Verfahren nach einem beliebigen der Ansprüche 1 bis 10, **dadurch gekennzeichnet, dass** das komplementäre Teil (16A bis 16D) an der ersten Fläche (22) befestigt wird,
wobei das Verfahren die Anordnung der zweiten Fläche (24) gegen die erste Wand (42), dann die Umformung der Grundschicht (14) in Gegenüberstellung zu einem Positionieranschlag (52A bis 52E) zur Bildung eines Vorsprungs (100) und die Ausrichtung des oder jedes komplementären Teils (16A bis 16D) gegen den Vorsprung (100) in Gegenüberstellung zum Positionieranschlag (52A bis 52E) aufweist.

13. Satz (10) zur Herstellung einer Struktur (12) für eine Innenausstattung eines Kraftfahrzeugs, umfassend:
- eine Grundschicht (14), die eine erste Fläche (22) und eine zweite Fläche (24) aufweist;
- mindestens ein vorgeschnittenes komplementäres Teil (16A bis 16D), das zur Befestigung an der ersten Fläche (22) oder der zweiten Fläche (24) dient;
- eine Form (40), die zur Umformung der Struktur (12) dient, wobei die Form (40) mindestens eine erste Wand (42) zur Auflage der zweiten Fläche (24) der Grundschicht (14) aufweist, **dadurch gekennzeichnet, dass** die Form (40) mindestens einen Anschlag (52A bis 52E) zur Positionierung des vorgeschnittenen komplementären Teils (16A bis 16D) in der Form (40) mit einer im Wesentlichen zu mindestens einem Rand des komplementären Teils (16A bis 16D) komplementären Form aufweist, wobei der Positionieranschlag (52A bis 52E) in Bezug auf die erste Wand (42) mit Abstand zum Umfang der ersten Wand (42) vorspringt.

14. Satz (10) nach Anspruch 14, **dadurch gekennzeichnet, dass** er eine zweite Wand (44) gegenüberliegend zur ersten Wand (42) aufweist, wobei die zweite Wand (44) mit der ersten Wand (42) einen Formhohlraum (46) begrenzt, und der Satz (10) eine Anordnung (50) zur Einspritzung eines Fluidmaterials, vorzugsweise eines Schäummaterials, in den Formhohlraum (46) aufweist.

## Claims

1. Method for manufacturing a motor vehicle interior equipment structure (12), comprising the following steps:
- providing a base layer (14) having a first face (22) and a second face (24);
- arranging the second face (24) against a first wall (42) of a mould (40) for shaping the structure (12);
- fixing at least one precut supplementary element (16A to 16D) to one of the first face (22) and the second face (24), the or each supplementary element (16A to 16D) having an extent which is less than the extent of said face (22, 24);
**characterised in that** the method comprises a step of grasping the precut supplementary element (16A to 16D) and then a step of wedging the precut supplementary element (16A to 16D) in front of a positioning stop (52A to 52E) having a shape substantially complementary to at least one edge of the supplementary element (16A to 16D), the positioning stop (52A to 52E) projecting relative to the first wall (42) away from the periphery of the first wall (42).

2. Method according to claim 1, **characterised in that** it comprises joining at least one additional layer (18) to the first face (22) of the base layer (14) in the mould (40).

3. Method according to claim 2, **characterised in that** the additional layer (18) is joined to the first face (22) during the formation, especially by foaming, of the additional layer (18).

4. Method according to any one of the preceding claims, **characterised in that** it comprises, after the or each supplementary element (16A to 16D) has been fixed to one of the first face (22) and the second face (24), joining an opposite layer (20) to the second face (24), the opposite layer (20) advantageously covering the supplementary element (16A to 16D) when the supplementary element (16A to 16D) is joined to the second face (24).

5. Method according to any one of the preceding claims, **characterised in that** it comprises a step of cutting an opening (30) through the structure (12), the cutting step comprising cutting the base layer (14) and optionally at least part of the supplementary element (16A to 16D).

6. Method according to any one of the preceding claims, **characterised in that** the fixing step comprises fixing at least a first precut supplementary element (16A) and at least a second precut supplementary element (16D) to the base layer (14), the positioning step comprising wedging the first supplementary element (16A) in front of a first positioning stop (52A) and then positioning the second supplementary element (16B) in front of the first supplementary element (16A) and in front of a second positioning stop (52C) situated away from the first positioning stop (52A).

7. Method according to claim 6, **characterised in that** it comprises the step of fixing at least a third precut supplementary element (16D) to the base layer (14), the positioning step comprising positioning the third supplementary element (16D) in front of the first supplementary element (16A) on the opposite side from the second supplementary element (16B) and in front of a third positioning stop (52E) projecting relative to the first wall (42) away from the first positioning stop (52A) and from the second positioning stop (52C).

8. Method according to any one of the preceding claims, **characterised in that** the first positioning stop (52A) comprises a first section (62) and a second section (64) which forms an angle with the first section (62) in order to delimit an angular cavity (66) between the first section (62) and the second section (64), the first supplementary element (16A) having a corner (72) which, during the positioning step, becomes wedged in the angular cavity (66) defined between the first section (62) and the second section (64).

9. Method according to any one of the preceding claims, **characterised in that** the first positioning stop (52A) is integral with the first wall (42) of the mould.

10. Method according to any one of the preceding claims, **characterised in that** the base layer (14) is a sound insulating layer, advantageously a layer of heavy mass, the supplementary element (16A to 16D) being a sound insulating supplementary element, advantageously a supplementary element of heavy mass.

11. Method according to any one of the preceding claims, **characterised in that** the supplementary element (16A to 16D) is fixed to the second face (24),
the method comprising, before the second face (24) is arranged against the first wall (42), a step of wedging the or each supplementary element (16A to 16D) against the first wall (42) in contact with a positioning stop (52A to 52E) which projects relative to the first wall (42) away from the periphery of the first wall (42),
the supplementary element (16A to 16D) being interposed between the first wall (42) and the second face (24) during the step of arranging the second face (24) against the first wall (42), the base layer (14) advantageously covering the or each positioning stop (52A to 52E) after the step of arranging the second face (24) against the first wall (42).

12. Method according to any one of claims 1 to 10, **characterised in that** the supplementary element (16A to 16D) is fixed to the first face (22),
the method comprising arranging the second face (24) against the first wall (42) and then deforming the base layer (14) in front of a positioning stop (52A to 52E) to form a projecting portion (100) and wedging the or each supplementary element (16A to 16D) against the projecting portion (100) in front of the positioning stop (52A to 52E).

13. Kit (10) for the manufacture of a motor vehicle interior equipment structure (12), comprising:
- a base layer (14) having a first face (22) and a second face (24);
- at least one precut supplementary element (16A to 16D) which is to be fixed to one of the first face (22) and the second face (24);
- a mould (40) for shaping the structure (12), the mould (40) having at least a first wall (42) for supporting the second face (24) of the base layer (14), **characterised in that** the mould (40) has at least one positioning stop (52A to 52E) for the precut supplementary element (16A to 16D) in the mould (40), having a shape which is substantially complementary to at least one edge of the supplementary element (16A to 16D), the positioning stop (52A to 52E) projecting relative to the first wall (42), away from the periphery of the first wall (42).

14. Kit (10) according to claim 13, **characterised in that** it comprises a second wall (44) opposite the first wall (42), the second wall (44) delimiting with the first wall (42) a moulding cavity (46), the kit (10) comprising an assembly (50) for injecting a fluid material, advantageously a foaming material, into the moulding cavity (46).
